(19) **Europäisches Patentamt / European Patent Office / Office européen des brevets**

(11) **EP 1 681 681 B1**

(12) **EUROPEAN PATENT SPECIFICATION**

(45) Date of publication and mention
of the grant of the patent:
**11.03.2009 Bulletin 2009/11**

(51) Int Cl.:
**G21C 3/62** *(2006.01)*      **G21C 21/02** *(2006.01)*

(21) Application number: **03811283.5**

(22) Date of filing: **29.09.2003**

(86) International application number:
**PCT/RU2003/000422**

(87) International publication number:
**WO 2005/031756 (07.04.2005 Gazette 2005/14)**

(54) **METHOD FOR PRODUCING CERAMIC NUCLEAR FUEL TABLETS, DEVICE AND CONTAINER FOR CARRYING OUT SAID METHOD**

VERFAHREN ZUR HERSTELLUNG KERAMISCHER KERNBRENNSTOFF-TABLETTEN, EINRICHTUNG UND BEHÄLTER ZUM AUSFÜHREN DES VERFAHRENS

PROCEDE POUR FABRIQUER DES TABLETTES CERAMIQUES DE COMBUSTIBLE NUCLEAIRE, INSTALLATION ET CONTAINER CORRESPONDANTS

(84) Designated Contracting States:
**BE DE FR GB**

(43) Date of publication of application:
**19.07.2006 Bulletin 2006/29**

(73) Proprietors:
• **The Federal State Unitarian Enterprise "A.A. Bochvar All-Russia Research Institute of Inorganic Materials"**
**Moscow, 123060 (RU)**
• **Ministerstvo Rossyskoi Federatsii po Atomnoi Energii**
**Moscow, 101000 (RU)**

(72) Inventors:
• **ASTAFIEV, Valery Alexandrovich**
**Moscow, 115477 (RU)**

• **GLUSHENKOV, Alexey Evgenievich**
**Moskovskaya obl., 143000 (RU)**
• **SKUPOV, Mikhail Vladimirovich**
**Moscow, 117279 (RU)**
• **STOLYAROV, Mikhail Ivanovich**
**Moscow, 111394 (RU)**
• **SHKABURA, Igor Alexeevich**
**Moscow, 123103 (RU)**

(74) Representative: **Lemcke, Brommer & Partner Patentanwälte**
**Bismarckstrasse 16**
**76133 Karlsruhe (DE)**

(56) References cited:
| | |
|---|---|
| EP-A2- 0 907 186 | EP-A2- 0 907 186 |
| GB-A- 1 371 595 | RU-C1- 2 122 247 |
| RU-C1- 2 122 247 | RU-C2- 2 183 035 |
| RU-C2- 2 183 035 | US-A- 3 790 492 |
| US-A- 4 261 934 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

The present invention relates to nuclear engineering and can find application for producing homogeneous nuclear fuel from a mixture of ceramic powders of fissionable components and various additives for fast- and thermal-neutron reactors. More particularly, the invention can find utility when used in the manufacturing process of ceramic nuclear fuel tablets (hereinafter referred to as tablets) for producing fuel elements made use of in the cores of nuclear reactors of electric power stations, e.g., tablets from uranium and plutonium dioxides (hereinafter referred to as mixed fuel), the content of various additives being from 0.05 percent by weight.

## *Background Art*

The manufacturing process of the tablets comprises the steps of preparing a molding powder, pressing and sintering the thus-prepared tablets. When tablets are manufactured from a number of components, e.g., from uranium and plutonium oxides, the step of the molding powder preparation comprises the operation of grinding and mixing the starting powders. It is said operation that the principal characteristics of finished tablets depend on, that is, homogeneity of the solid solution, density, grain size, microstructure, and so on, which govern the working efficiency of nuclear fuel in the reactor.

One state-of-the-art method for preparing a molding powder by intermixing the starting uranium oxide and plutonium oxide powders, pressing the resultant mixture and sintering the resultant tablets (cf. PCT Application 96/25,746, IPC G 21 C 3/62, published Aug. 22, 1996). According to said method, the molding powder is prepared by grinding and mixing together the components in a ball mill. The method suffers from a low grinding and mixing efficiency of the powders. As a result, the structure of the sintered tablets is composed of two phases, whereby the required homogeneity of the mixed fuel is unattainable. The finished tablets are poorly dissoluble in nitric acid which affects adversely realizing a closed fuel cycle.

Another prior-art method of manufacturing tablets for fuel elements of thermal-neutron reactors from $(U,Pu)O_2$, comprising premixing powdered uranium and plutonium oxides in a V-shaped mixer and grinding the resultant mixture for 20 hours in a ball or hammer mill, followed by pressing and sintering the tablets [cf. "Development, manufacture and operation of fuel elements in nuclear power reactors", a textbook by F.G.Reshetnikov, Yu.K.Bibilashvili et al., Book 1, Moscow, Energoatomizdat PH, 1995, p.110 (in Russian)]. The method under consideration also suffers from a low grinding and intermixing efficiency of the powders which prevents attaining the required homogeneity of the mixed fuel. Furthermore, the process suffers from low productive capacity and complicated providing nuclear safety for production processes. Besides, too a prolonged operation of grinding and intermixing the powders leads to a severe wear on the grinding bodies and the mixer walls and soiling the molding powder with harmful impurities.

A method for preparing a homogeneous nuclear fuel from a mixture of dioxides of uranium and plutonium for producing tablets, comprising the steps of preparing a molding powder in a vortex bed, granulating and sintering of tablets (cf. RU Pat. #2122247, IPC[6] G 21 C 21/00). The vortex bed in the effective volume of a cylindrical mixer is established due to an intense motion of magnetic needles under the effect of a variable magnetic field. It is under the action of said needles that the powders are intermixed and further disintegrated, as well as activation the powder mixture particles. The method in question is in fact the closest to the method proposed herein and is therefore elected as the prototype.

Known in the art presently is a device for carrying the prototype method into effect, said device comprising an inductor with a coil shaped as a cylinder with a central opening having its axis arranged horizontally. A tube of a non-magnetic material is put inside the coil interior for receiving a hermetically sealed cylinder-shaped container of a non-magnetic material, e.g., titanium, adapted to hold the powders to be mixed together, and needles from a ferromagnetic material (cf. RU Pat. #2122247, IPC[6] G 21 C 21/00). For more efficient grinding and intermixing processes the device is provided with means for imparting horizontal reciprocation to the container inside the tube. The discussed before is in fact the closest to the proposed one and is therefore elected as the prototype.

One prior-art container for grinding and intermixing powders is known to appear as a cylinder-shaped cup having a cylinder-shaped sealed cover, both said cup and said cover being made of a non-magnetic material (cf. RU Pat. #2122247, IPC[6] G 21 C 21/00). The container under discussion is the closest to the proposed one and is therefore elected as the prototype.

The stage of preparing a molding powder carried out in accordance with the prototype method using the device and container described before, comprises the following steps: charging the starting powders of uranium and plutonium dioxides, the grinding process initiating agents, as well as the ferromagnetic needles into the container cup; hermetically sealing the container using a removable cover; putting the container together with the powders and needles into the interior of the horizontal tube placed inside the inductor coil; grinding and mixing the powders together under the action of the ferromagnetic needles moving in the inductor magnetic field upon the container reciprocating motions inside the tube; withdrawing the container from the tube; cooling the container together with the contents thereof; uncovering the container and discharging the resultant powder mixture and the needles; separating the powder from the needles; putting the container into a granulation unit. The container cup is charged with uranium and plutonium dioxides for 50-70% of its holding capacity, and the total weight of the magnetic needles being loaded should not exceed half the critical mass value at which the needles cease rotating in the container electromagnetic field. Geometric shape and the ratio of the geometric dimensions of the ferromagnetic needles are of substantial significance in the method proposed herein; thus, for instance, the ratio of the needle length to the diameter thereof should range from 8 to 14. Charging the starting powders into the container may be accompanied by adding special dopants thereto, e.g., burnable neutron absorbers.

The molding powder preparing operation described before suffers from inadequately efficacious intermixing and grinding of powders for the reasons laid down below. The rotation zone of the inductor variable magnetic field under the effect of which the ferromagnetic needles are moving, is substantially smaller than the height of the cylinder-shaped container. Therefore during the operation a considerable proportion of the powder proves to be off the zone of effect of the electromagnetic field on the ferromagnetic needles, since the powder is spread in a layer over the entire length of the horizontal container. That is why in the course of mixing the powders together one has to set the container in reciprocating motion with a definite amplitude inside the horizontal tube. However, such being the case the conditions for grinding and intermixing of the powders in the end container zones differ strikingly from those at the center thereof, thus affecting adversely the efficiency of the process, extending the time spent for the operation and deteriorating the characteristics of the resultant mixture. Moreover, such a process comprises a great deal of elementary steps (e.g., separating the powder from the needles, loading the needles to the container, motion of the container) and is therefore hardly amenable to automation which is of importance with a viewpoint of providing safety for producing a mixed nuclear fuel.

One more disadvantage inherent in the known method resides in low container cooling efficiency in the course of grinding and intermixing of the powders, this being due to horizontal arrangement of the container in the tube, and a badly affected efficiency of convective cooling of the container holding the powder. As a result, once the powders held in the container are treated, in accordance with the prototype method, for 6-10 min., the container is heated up to a temperature of about 100°C which extends the container cooling time before its unsealing and emptying.

### Summary of the Invention

It is a primary and essential object of the present invention to add to the efficiency of the grinding and intermixing of powders and to attain the required characteristics of the resultant powder mixture necessary for preparing a homogeneous mixed nuclear fuel having different composition, e.g., comprising a high-background recovered plutonium or various additives in an amount of from 0.05 percent by weight.

Said object is accomplished due to the fact that in a known method for producing a homogeneous nuclear fuel appearing as tablets from a powder mixture (which method comprises the steps of preparing a molding powder, its granulation, pressing and sintering the resultant tablets, wherein the steps of preparing the molding powder comprises the following operations: charging the dosages of starting powdered components and a grinding process initiating agent, as well as the ferromagnetic needles into a container made of a non-magnetic material; hermetically sealing the container; putting the container together with the powders and ferromagnetic needles into the interior of the tube made of a non-magnetic material placed inside the inductor coil; grinding and intermixing the powders under the action of the ferromagnetic needles moving in the inductor magnetic field; withdrawing the container from the tube; cooling the container; unsealing the container and discharging the resultant powder mixture therefrom into the granulation unit), there are established in the container interior a cylinder-shaped working zone adapted to permanently accommodate the ferromagnetic needles, and an end zone, both of said zones are isolated from each other by a meshed partition, the dosages of the powders are charged into the working zone through the end zone and a sieve, the container is put into the tube interior for the height of the container working zone, said tube being positioned vertically inside the inductor coil, the powders are treated by virtue of the ferromagnetic needles moving in the working zone, and the resultant powder mixture is discharged from the container via the meshed partition and the end zone without unloading the ferromagnetic needles from the working zone.

According to a particular embodiment of the herein-proposed method, the weight of the ferromagnetic needles being loaded are set to be from 2.5% to 90% of the critical mass upon exceeding of which the needles stop rotating in the mixer electromagnetic field.

According to another particular embodiment of the method, the critical mass of the ferromagnetic needles is calculated by the formula:

$$m_{cr} = K_{cr} \cdot V_c \cdot \rho_n,$$

wherein $K_{cr}$ is the criticality factor of loading the mixer with the needles; $V_c$ is the container interior volume corresponding to the height of the electromagnetic field rotation zone; $\rho_n$ is the density of the needle material.

According to one more particular embodiment of the method, a total volume of the ceramic powders to be charged into the container is set to be not in excess of 90% of a free volume thereof falling on the electromagnetic field rotation zone.

According to a still more particular embodiment of the method, use is made of ferromagnetic needles, wherein the ratio of the length thereof to their diameter varies from 8 to 14.

According to a yet still more particular embodiment of the method, the ratio of a total weight of ceramic powders to the weight of ferromagnetic needles is set to range from 0.3 to 3.0, predominantly from 0.5 to 2.0.

According to a further particular embodiment of the method, rotation frequency of the electromagnetic field is set to be from 10 to 50 Hz.

According to a still further particular embodiment of the method, the powders are ground and mixed together for 1-20 minutes.

According to a yet still further particular embodiment of the method, the powders are ground and mixed together in a number of cycles for 1-10 minutes.

According to another particular embodiment of the method, all operations at the step of preparing the molding powder are conducted in an inert gas atmosphere.

The object of the invention is accomplished also due to the fact that in a known device (comprising a protective chamber, a unit for charging dosages of starting powdered components and a grinding process initiating agent into the container, a grinding and intermixing unit for the powders, appearing as an inductor having a coil inside which a tube of a non-magnetic material is put, adapted to receive a hermetically sealed cylinder-shaped container of a non-magnetic material adapted to hold the powders and needles from a ferromagnetic material, a powder granulation unit, as well as a container conveying and positioning system), said grinding and intermixing unit for the powders involves vertically arranged axes of said inductor and said tube, the tube is blanked off at the lower end thereof to form a fragment of the protective chamber, said protective chamber appears as a circuit and the container is adapted to move over said circuit from the charging unit towards the grinding and intermixing unit, next to the granulation unit and finally to the charging unit, said circuit of the protective chamber is formed by process boxes adapted to accommodate the units of the device, and by conveying boxes, and the container conveying and positioning system is provided with elements for vertically moving the container in the zone of charging unit and the zone of grinding and intermixing unit, and for tipping over said container to discharge the powder in the zone of the mixture granulation unit.

According to another particular embodiment of the device, the protective chamber is filled with an inert gas atmosphere.

According to one more particular embodiment of the device, the protective chamber is provided with a conveying box for the container to withdraw from said protective chamber circuit.

According to still one more particular embodiment of the device, the housing of the protective chamber is functionally combined with the load-bearing framework of the structure of said device.

According to yet still one more particular embodiment of the device, the inductor with the coil is disposed on the outside of said protective chamber.

The object of the invention is accomplished also due to the fact that in a known container for carrying the proposed method into effect (said container appearing as a cylinder-shaped vessel from a non-magnetic material having a hermetic sealing unit at an end face thereof), said hermetic sealing unit appearing as a valve having an interior space isolated from the cylinder-shaped vessel by a transversal meshed partition and connected to said cylindrical vessel via a flanged joint.

According to another particular embodiment of the container, said flanged joint is separable.

According to one more particular embodiment of the container, said valve appears as a ball cock provided with a drive mechanism for the cock to rotate.

According to still more particular embodiment of the container, said flanged joint is provided with a platform for the container to be fixed stationary and positioned.

According to yet still more particular embodiment of the container, the inner cylindrical surface of said vessel has a chamfered junction to a flat bottom thereof.

### Brief Description of the Drawings

The essence of the invention is illustrated by the following four accompanying drawings.

FIG.1 presents a functional diagram which illustrates carrying the proposed method into effect with the aid of the device and container being claimed;
FIG.2 shows a schematic diagram of the protective chamber;
FIG.3 is a general view of the proposed container; and
FIG.4 presents data on a grain size and distribution of plutonium concentration *b* over the surface of a polished specimen *a* for the proposed method and the corresponding data *c* and *d* for the prototype method.

### Variants of Particular Embodiments of Invention

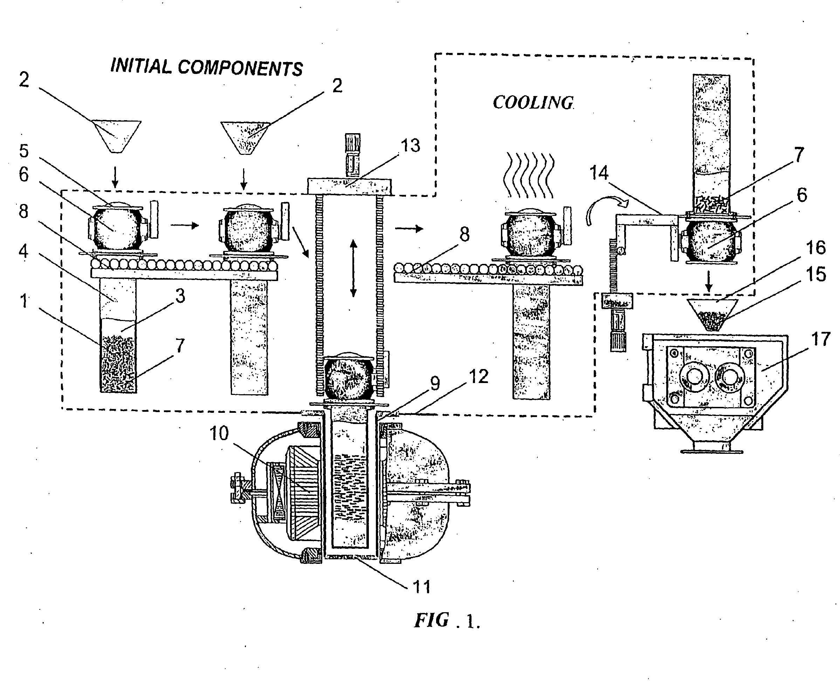

Carrying the method into effect and the operating principle of the device are illustrated by the diagram shown in FIG.1.

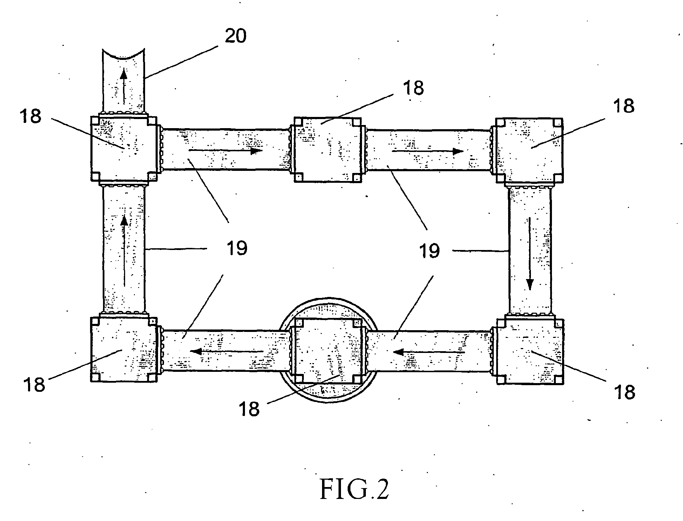

Starting powders 1, e.g., powdered uranium dioxide and plutonium dioxide, a grinding process initiating agent, and other additives are fed from batching hoppers 2, via an end zone 5 of a valve 6 and a meshed partition (not shown in FIG.1), to an working zone 3 of a container 4, wherein ferromagnetic needles 7 are kept constantly. The container 4 is conveyed, by means of a conveying and positioning system 8 thereof, to the grinding and intermixing unit towards a vertical tube 9 put into a coil 10 of an electromagnetic vortex mixer. A blank plug 11 is provided at the lower end of the tube 9. Said tube 9 is secured, in the area of the upper open end thereof, on the wall of the protective chamber 12 and is in fact a fragment thereof; (the geometry of the protective chamber is shown in FIG. 1 schematically, the general view of a variant of the chamber geometry being shown in FIG. 2). The container 4 is moved vertically downwards along the axis of the tube 9, using an element 13 and is fixed stationary therein so that the container working zone 3 should align with the working zone of the mixer coil 10. As a result, a variable electromagnetic field is excited, having a preset rotation frequency, said field producing an effect on the ferromagnetic needles 7. It is under said effect that said ferromagnetic needles are made to perform compound rotary motions in the working zone of the container 4, thereby further disintegrating and intermixing the powdered components. Next the container 4 is actuated by the element 13 to move upwards and return onto the conveyer of the system 8, is cooled down, moved towards the granulation unit and tipped over using an element 14, whereupon the valve 6 is opened and a powder mixture 15 is discharged via the meshed partition (not shown in FIG.1) and the end zone 5 into a receiving hopper 16 of the granulation unit 17. The ferromagnetic needles 7 remain in this case on said meshed partition in the container working zone 3. Then the container 4 together with the ferromagnetic needles 7 are returned to the charging unit to receive a next dosage of the starting powders. The resultant mixture of powders is granulated, pressed and sintered according to known techniques.

A general view of a variant of the protective chamber geometry is shown in FIG.2. The chamber appears as a circuit adapted for the container to move there inside along the following circular pathway: charging unit - grinding and intermixing unit - granulation unit - charging unit. The circuit of the protective chamber is established by process boxes 18 for disposing the units of the device and conveying boxes 19 intended for moving and positioning the container in the circuit. The protective chamber is provided with an additional conveying box 20 for the containers to put into and withdraw from the circuit.

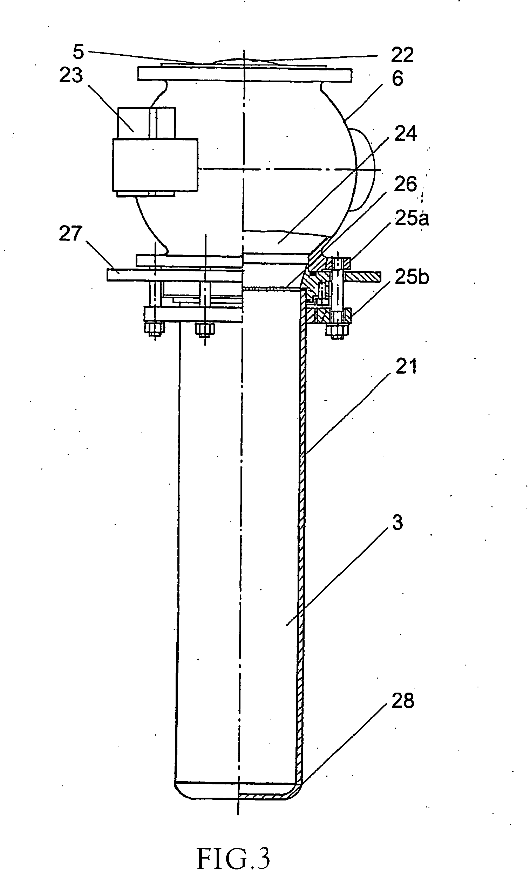

The container (FIG.3) comprises a cylinder-shaped vessel 21 made of a non-magnetic material, e.g., titanium, a hermetic sealing unit appearing as the valve 6 having a spherical core 22 which is provided with a drive mechanism 23 for the core to rotate inside an interior space 24 of the valve 6. Said valve is made of a non-magnetic material, such as stainless steel. Both the valve 6 and the cylinder-shaped vessel 21 are interconnected through a flanged joint 25a and 25b and isolated from each other by a transversal meshed partition 26 which is impervious to ferromagnetic needles. Said flanged joint 25a and 25b may be separable for the ferromagnetic needles (not shown in FIG.3) or the meshed partition 26 to replace. The container is provided with a platform 27 for said container fixing in place or positioning. To reduce resistance to rotation of the needles and ruling out the danger of forming dead zones, the inner cylindrical surface of the vessel mates together with the flat bottom thereof through a junction 28.

Practical realization of the proposed method enabled one to obtain empirical relationships instrumental in adding to the efficiency of the process of grinding and intermixing the starting powders. It has been ascertained a substantial influence of the size of needles and the weight of their charge into the container on the process of grinding and intermixing the starting powders. Hence the grinding and intermixing processes proceed most efficiently with the needle length-to-diameter ratio of from 8 to 14.

The ratio between the weight of needles being charged and the weight of the starting powders influences the coursing of the process, too, said ratio depending on a preset capacity of the mixing process, ingress of undesirable impurities resulting from attrition, and the mass $m_{cr}$ of critical charge of the working container with the needles. The absolute value of $m_{cr}$ is calculated according to the following formula:

$$m_{cr} = K_{cr} \cdot V_c \cdot \rho_n,$$

wherein $K_{cr}$ is the criticality factor of loading the mixer with the needles; $V_c$ is the container interior volume corresponding to the height of the electromagnetic field rotation zone; $\rho_n$ is the density of the needle material. The value of $K_{cr}$ is found experimentally for each type of needles and is equal to the ratio between the container volume located in the electromagnetic field effective zone and the total volume of all needles charged at which ratio the needles cease moving.

It is experimentally found the conditions of a minimum metal fretting depending on charge of ferromagnetic needles, treatment time and material of the needles. It is recommendable to use ferromagnetic needles from ball-bearing steel, grade ShKh-15 or ShKh-45 (ШХ-15 or ШХ-45) having the following dimensions: diameter $d = 0.2$ cm, length $l = 2$ cm. The criticality factor of loading $K_{cr}$ for such needles is 0.1. Use was made of a container having an interior volume located in the electromagnetic field rotation zone, $V_c = 2713$ cm$^3$ (which is a maximum volume for the used mixer ABC-150 having a length L of the working zone equal to 24 cm and a maximum allowable container diameter D = 12 cm), the density of the needle material $\rho_n \approx 7.5$ cm$^3$.

A maximum possible (as far as contamination of the powders with impurities is concerned) ratio $f$ between the weight of needles and the weight of powder is 2, a minimum allowable value of $f$ depends on disintegration efficiency and equals 0.3.

The numerical value of $m_{cr} \approx 1800$ g. The recommendable amount of charge of the working container with the powder ranges from 0.6 to 3.6 kg, and the container may be charged by not more than 90% its free capacity falling on the working zone of electromagnetic field.

It is found experimentally that with the electromagnetic field rotation frequency reduced from 50 to 30 Hz the grinding and intermixing efficiency of the powders remains practically unaffected, and the temperature of the outer walls of the container titanium cup after the operation is found to have dropped by approximately 50°C.

All molding-powder preparing operations in experiments with radioactive and pyrophorous powders were performed in a shielded box filled with an inert gas atmosphere.

### *Specific Exemplary Embodiments Of Invention*

Example 1

Preparing tablets of a mixed uranium-plutonium nuclear fuel from starting uranium dioxide powders as per Specifications TU 52 000-28 (TY 52 000-28) and plutonium dioxide powders as per Specifications TU 95.2-79 (TY 95.2-79), as well as zinc stearate taken in respective amount of 95 g, 5 g and o.2 g and a total weight of the starting powders of 100.2 g. The process of grinding and intermixing the powders is carried out in a titanium container having an working zone measuring 12 cm in diameter and 24 cm in height, using needles from steel grade SH KH-15 (ШХ-15) measuring 0.2 cm in diameter and 2 cm in length and a vortex mixer having a working zone 24 cm long and an opening 13 cm in diameter for the container to dispose.

Then a critical mass of charge of the working container with the needles is calculated by the formula:

$$m_{cr} = K_{cr} \cdot V_c \cdot \rho_n,$$

wherein $K_{cr}$ is the criticality factor of loading the mixer with the needles, equal to 0.1; $V_c$ is the container interior volume falling on the height of the electromagnetic field rotation zone, equal to 2713 cm³; $\rho_n$ is the density of the needle material, equal to 7.5 g/cm³, whereby the value of $m_{cr}$ is 2000 g. Next the needles having a total weight of 200 g are charged into the container, the ratio between the weight of the needles and the weight of the powder being 2 and the volume of the powder in the container ~50 cm³ which makes up ~1.9% of a free container volume falling on the working zone of the electromagnetic field. Thereupon a meshed partition made of brass and having a mesh size of 1 mm is put onto the cylinder-shaped vessel, as well as the hermetic sealing unit appearing as type ДУ-120 ball valve, and the container flanged joint is sealed hermetically. Next the aforementioned dosages of the starting powders are charged into the working zone of the container accommodated in the argon-filled protective chamber, via the valve interior space and the meshed partition, the container is sealed hermetically and the powders are intermixed in type ABC-150 vortex mixer at an electromagnetic field rotation frequency of 30 Hz for a single cycle lasting 4 min. Then the container is cooled for 5 min and the powder mixture is discharged into type L200/30P granulation unit. The resultant granulate is pressed into crude tablets having a diameter of ~7.2 mm, a height of ~6 mm and a density of 6.5 g/cm³. The thus-prepared tablets are sintered in an argon-hydrogen medium at 1750°C for 3 h.

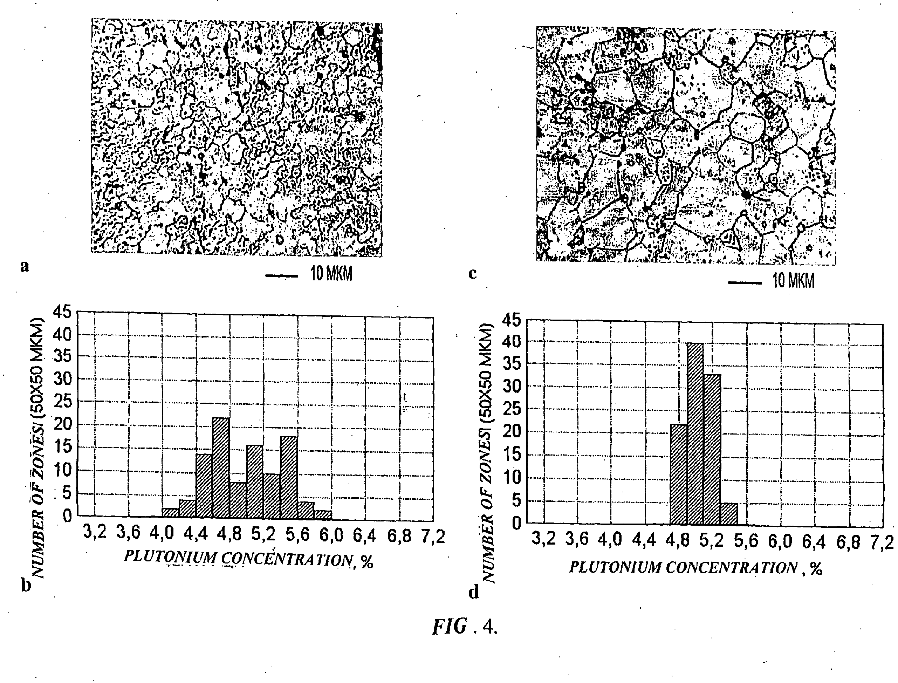

Then the resultant tablets are examined under an electronic scanning microscope and metallographically. Comparison results of examination of the tablets prepared using the proposed invention and the prototype method are presented in FIG.4. The results obtained demonstrate that preparing a molding powder by the proposed method provides for a homogeneous structure of the solid solution of (U,Pu)O₂ of a mixed fuel featuring a uniform distribution of the components over the entire mass of a tablet (cf. data *a* and *b* in FIG.4), and said data exceed substantially the respective characteristics of the prototype method (cf. data *c* and *d* in FIG.4). Furthermore, there is provided complete solubility of the tablets of such a fuel in nitric acid, which is of great importance when recovering a mixed fuel.

Example 2

Preparing tablets of a mixed uranium fuel of corrected enrichment from starting powders of depleted uranium dioxide (U-235 content of 0.24%) and highly enriched uranium dioxide (U-235 content of 90%), grade TU 95.604-84 (TY 95.604-84), as well as commercial-origin zinc stearate, taken in respective amounts of 99.95 g, 0.05 g and 0.2 g and a total weight of the starting powders equal to 100.2 g.

Next a molding powder is prepared, tablets are pressed and sintered as described in Example 1.

Thereupon the resultant tablets are subjected to examination by metallographic analysis and gamma-spectrometry. An average U-235 isotope content of the tablets is 0.28%, a root-mean-square deviation of the U-235 concentration of ten specimens is 0.004%.

### *Industrial Applicability*

Results of examination of the tablets produced using the proposed invention demonstrate that preparing a molding powder by the proposed method provides for a homogeneous structure of a mixed fuel having its components distributed uniformly over the entire volume of a tablet.

Hence use of the proposed method for producing a homogeneous mixed nuclear fuel will enable one to gain substantial advantages over the known methods, namely, higher homogeneity and a substantial increase of the grain size in the tablets of a mixed ceramic fuel; an efficient use of the electromagnetic mixer working zone which may be charged with powders and needles; a reduced period of grinding and intermixing the starting powders due to intensified processes proceeding in the working zone of the vertically arranged container; simple and easy establishing, on the basis of the techniques proposed herein, a high-capacity plant for producing mixed ceramic fuel; simple provision of nuclear safety of the production techniques used.

**Claims**

1. A method for manufacturing pellets of a ceramic nuclear fuel comprising the steps of preparing a molding powder, its granulation, pressing and sintering the resultant tablets, wherein the step of preparing the molding powder comprises the operations of charging the dosages of starting powdered components and a grinding process initiating agent into a container made of a non-magnetic material, hermetically sealing the container, putting the container together with the powders and ferromagnetic needles into the interior of the tube made of a non-magnetic material placed inside the inductor coil, grinding and intermixing the powders under the action of the ferromagnetic needles moving in the inductor magnetic field, withdrawing the container from the tube, cooling the container, unsealing the container, and discharging the resultant powder mixture therefrom into the granulation unit, **CHARACTERIZED in that** there are established in the container interior a cylinder-shaped working zone adapted to constantly accommodate the ferromagnetic needles, and an end zone, both of said zones are isolated from each other by a meshed partition impervious to the needles, the dosages of the powders are charged into the working zone through the end zone and the meshed partition, the container is put into the tube interior for the height of the container working zone, said tube being positioned vertically inside the inductor coil, the powders are treated by virtue of the ferromagnetic needles moving in the working zone, and the resultant powder mixture is discharged from the container via the meshed partition and the end zone without unloading the ferromagnetic needles from the working zone.

2. A method as claimed in claim 1, **CHARACTERIZED in that** the weight of the ferromagnetic needles being loaded are set to be from 2.5% to 90% of the critical mass upon exceeding of which the needles stop rotating in the mixer electromagnetic field.

3. A method as claimed in claim 2, **CHARACTERIZED**

in that the critical mass of the ferromagnetic needles is calculated by the formula:

$$m_{cr} = K_{cr} \cdot V_c \cdot \rho_n,$$

wherein $K_{cr}$ is the criticality factor of loading the mixer with the needles; $V_c$ is the container interior volume corresponding to the height of the electromagnetic field rotation zone; $\rho_n$ is the density of the needle material.

4. A method as claimed in claim 1, **CHARACTERIZED in that** a total volume of the ceramic powders to be charged into the container is set to be not in excess of 90% of a free volume thereof falling on the electromagnetic field rotation zone.

5. A method as claimed in claim 1, **CHARACTERIZED in that** use is made of ferromagnetic needles, wherein the ratio of the length thereof to their diameter varies from 8 to 14.

6. A method as claimed in claims 1, 2, 3 and 4, **CHARACTERIZED in that** the ratio of a total weight of ceramic powders to the weight of ferromagnetic needles is set to range from 0.3 to 3.0, predominantly from 0.5 to 2.0.

7. A method as claimed in claim 1, **CHARACTERIZED in that** rotation frequency of the electromagnetic field is set to be from 10 to 50 Hz.

8. A method as claimed in claim 1, **CHARACTERIZED in that** the powders are ground and mixed together for 1-20 minutes.

9. A method as claimed in claim 8, **CHARACTERIZED in that** the powders are ground and mixed together in a number of cycles for 1-10 minutes.

10. A method as claimed in claim 1, **CHARACTERIZED in that** all operations at the step of preparing the molding powder are conducted in an inert gas atmosphere.

11. A device for preparing the molding powder in order to carry into effect said method for manufacturing pellets of a ceramic nuclear fuel of claim 1, comprising a protective chamber, a unit for charging dosages of starting powdered components and a grinding process initiating agent into the container, a grinding and intermixing unit for the powders appearing as an inductor having a coil inside which a tube from a non-magnetic material is put, adapted to receive a hermetically sealed cylinder-shaped container from a non-magnetic material adapted to hold the powders and needles from a ferromagnetic material, a powder granulation unit, as well as a container conveying and positioning system, **CHARACTERIZED in that** said grinding and intermixing unit for the powders involves vertically arranged axes of said inductor and of said tube, the tube is blanked off at the lower end thereof to form a fragment of the protective chamber, said protective chamber appears as a circuit and the container is adapted to perform circular motion over said circuit from the charging unit towards the grinding and intermixing unit, next to the granulation unit and again to the charging unit, said circuit of the protective chamber is formed by the process boxes adapted to accommodate the units of the device, and by conveying boxes, and the container conveying and positioning system is provided with elements for vertically moving the container along the tube axis and for tipping over said container to discharge the powder in the zone of the mixture granulation unit.

12. A device as claimed in claim 11, **CHARACTERIZED in that** the protective chamber is filled with an inert gas atmosphere.

13. A device as claimed in claim 11, **CHARACTERIZED in that** the protective chamber is provided with a conveying box for the container to withdraw from the protective chamber circuit.

14. A device as claimed in claim 11, **CHARACTERIZED in that** the housing of the protective chamber is functionally combined with the load-bearing framework of the structure of said device.

15. A device as claimed in claim 11, **CHARACTERIZED in that** the inductor with the coil is disposed on the outside of said protective chamber.

16. A container for carrying into effect said method for manufacturing pellets of a ceramic nuclear fuel of claim 1, appearing as a cylinder-shaped vessel from a non-magnetic material provided with a sealing unit at an end thereof, **CHARACTERIZED in that** the hermetic sealing unit appears as a valve having an interior space isolated from the cylinder-shaped vessel of the container by a transversal meshed partition impervious to ferromagnetic needles, said valve being connected to said cylindrical vessel via a flanged joint.

17. A container as claimed in claim 16, **CHARACTERIZED in that** the flanged joint is separable.

18. A container as claimed in claim 16, **CHARACTERIZED in that** the valve appears as a ball cock provided with a drive mechanism mounted thereon for the cock to rotate.

19. A container as claimed in claim 16, **CHARACTERIZED in that** the flanged joint is provided with a platform for the container to be fixed stationary and positioned.

20. A container as claimed in claim 16, **CHARACTERIZED in that** the cylindrical portion of the vessel making part of the container working zone, on its inner side has a chamfered junction to a flat bottom thereof.

**Patentansprüche**

1. Verfahren zur Herstellung von Pellets eines keramischen nuklearen Brennstoffs, das folgende Schritte umfasst: Bereitung eines Pulvers für den Pressprozess, seine Granulation und das Komprimieren und Sintern der sich daraus ergebenden Tabletten, wobei der Schritt der Bereitung des Pulvers die Vorgänge des Ladens der dosierten Mengen der pulverförmigen Ausgangs-Komponenten und eines den Mahlprozess einleitenden Mittels in einen aus nicht-magnetischem Material gefertigten Behälter, das hermetische Verschließen des Behälters, das Verbringen des Behälters zusammen mit den Pulvern und ferromagnetischen Nadeln in das Innere des aus nicht-magnetischen Material hergestellten und im Inneren einer Induktionsspule angeordneten Rohres, das Mahlen und Vermischen der Pulver durch die Wirkung der sich im magnetischen Feld der Induktionsspule bewegenden ferromagnetischen Nadeln, das Herausziehen des Behälters aus dem Rohr, das Abkühlen des Behälters, das Öffnen des Behälters und das Entleeren der resultierenden Pulvermischung aus demselben in die Granulierungseinheit, **dadurch gekennzeichnet, dass** im Inneren des Behälters eine zylinderförmige Arbeitszone, die so beschaffen ist, dass sie die ferromagnetischen Nadeln ständig beherbergt, und eine Endzone eingerichtet werden, wobei die beiden besagten Zonen voneinander durch eine für die Nadeln undurchlässige Trennwand aus Drahtgeflecht isoliert sind, dass die dosierten Mengen der Pulver durch die Endzone und die Trennwand aus Drahtgeflecht in die Arbeitszone geladen werde, dass der Behälter für die Höhe der Arbeitszone des Behälters in das Innere des Rohres verbracht wird, wobei besagtes Rohr vertikal innerhalb der Induktionsspule platziert ist, dass die Pulver aufgrund der sich in der Arbeitszone bewegenden ferromagnetischen Nadeln behandelt werden und dass die resultierende Pulvermischung aus dem Behälter durch die Trennwand aus Drahtgeflecht und die Endzone entladen wird, ohne dabei die ferromagnetischen Nadeln aus der Arbeitszone zu entfernen.

**2.** Verfahren nach Anspruch 1, **dadurch gekennzeichnet, dass** das Gewicht der verwendeten ferromagnetischen Nadeln auf einen Wert von 2,5 % bis 90 % der kritischen Masse, bei deren Überschreiten die Nadeln aufhören, sich im elektromagnetischen Feld des Mischers zu drehen, festgelegt wird.

**3.** Verfahren nach Anspruch 2, **dadurch gekennzeichnet, dass** die kritische Masse der ferromagnetischen Nadeln durch folgende Formel berechnet wird:

$$m_{cr} = K_{cr} \cdot V_c \cdot \rho_n,$$

wobei $K_{cr}$ der Kritikalitätsfaktor der Ladung des Mischers mit den Nadeln ist; $V_c$ ist das Innenvolumen des Behälters, das der Höhe der Rotationszone des magnetischen Feldes entspricht; $\rho_n$ ist die Dichte des Materials der Nadeln.

**4.** Verfahren nach Anspruch 1, **dadurch gekennzeichnet, dass** festgelegt wird, dass das Gesamtvolumen der in den Behälter zu ladenden keramischen Pulver 90% eines freien Volumens davon, das auf die Rotationszone des magnetischen Feldes entfällt, nicht überschreitet.

**5.** Verfahren nach Anspruch 1, **dadurch gekennzeichnet, dass** von ferromagnetischen Nadeln Gebrauch gemacht wird, wobei das Verhältnis von deren Länge zu deren Durchmesser von 8 bis 14 variiert.

**6.** Verfahren nach den Ansprüchen 1, 2, 3 und 4, **dadurch gekennzeichnet, dass** festgelegt wird, dass das Verhältnis des Gesamtgewichts der keramischen Pulver zum Gewicht der ferromagnetischen Nadeln sich zwischen 0,3 und 3,0, überwiegend jedoch zwischen 0,5 und 2,0 bewegen soll.

**7.** Verfahren nach Anspruch 1, **dadurch gekennzeichnet, dass** die Rotationsfrequenz des elektromagnetischen Feldes auf Werte von 10 bis 50 Hz festgelegt wird.

**8.** Verfahren nach Anspruch 1, **dadurch gekennzeichnet, dass** die Pulver 1-10 Minuten lang gemahlen und zusammengemischt werden.

**9.** Verfahren nach Anspruch 1, **dadurch gekennzeichnet, dass** die Pulver 1-10 Minuten lang in einer Anzahl von Zyklen gemahlen und zusammengemischt werden.

**10.** Verfahren nach Anspruch 1, **dadurch gekenn-** zeichnet, dass** alle Operationen auf der Stufe der Bereitung des Pulvers für den Pressprozess in einer Edelgasatmosphäre durchgeführt werden.

**11.** Vorrichtung zur Bereitung des Pulvers für den Pressprozess zur Durchführung besagten Verfahrens zur Herstellung von Pellets eines keramischen nuklearen Brennstoffs nach Anspruch 1, die folgende Bestandteile aufweist: eine Schutzkammer, eine Vorrichtung zum Laden von dosierten Mengen der pulverförmigen Ausgangs-Komponenten und eines den Mahlprozess einleitenden Mittels in den Behälter, eine Mahl- und Mischvorrichtung für die Pulver, ausgeführt als Induktor, der eine Spule aufweist, in deren Inneres ein Rohr aus nicht-magnetischem Material platziert ist, das so beschaffen ist, dass es einen hermetisch verschlossenen zylinderförmigen Behälter aus einem nicht-magnetischen Material aufnimmt, der wiederum so beschaffen ist, dass er die Pulver und außerdem Nadeln aus ferromagnetischem Material fasst, außerdem ein System zum Transport und zur Positionierung von Behältern, **dadurch gekennzeichnet, dass** die besagte Mahl- und Mischvorrichtung für die Pulver vertikal angeordnete Achsen des besagten Induktors und des besagten Rohres umfasst, dass das Rohr an seinem unteren Ende blind endet, um einen Teil der Schutzkammer zu bilden, dass besagte Schutzkammer als Kreislauf erscheint und der Behälter so beschaffen ist, dass er eine Kreislauf-Bewegung durch besagten Kreislauf vollführt und zwar von der Ladevorrichtung zur Mahl- und Mischvorrichtung, dann zur Granulierungsvorrichtung und wieder zur Ladevorrichtung, dass besagter Kreislauf der Schutzkammer gebildet wird aus Verfahrens-Kästen, die so beschaffen sind, dass sie die Einheiten der Vorrichtung aufnehmen, sowie aus Transport-Kästen, und dass das Behältertransport- und Positionierungssystem mit Elementen zur vertikalen Bewegung des Behälters entlang der Rohrachse und zum Kippen besagten Behälters zum Entladen des Pulvers in der Zone der Mischungs-Granulierungsvorrichtung ausgestattet ist.

**12.** Vorrichtung nach Anspruch 11, **dadurch gekennzeichnet, dass** die Schutzkammer mit einer Edelgasatmosphäre gefüllt ist.

**13.** Vorrichtung nach Anspruch 11, **dadurch gekennzeichnet, dass** die Schutzkammer mit einem Transport-Kasten ausgestattet ist, um den Behälter aus dem Kreislauf der Schutzkammer herauszuziehen.

**14.** Vorrichtung nach Anspruch 11, **dadurch gekennzeichnet, dass** das Gehäuse der Schutzkammer funktionell mit dem Last tragenden Rahmen der Struktur besagter Vorrichtung kombiniert ist.

**15.** Vorrichtung nach Anspruch 11, **dadurch gekennzeichnet, dass** der Induktor mit der Spule außerhalb besagter Schutzkammer angeordnet ist.

**16.** Behälter zur Durchführung besagten Verfahrens zur Herstellung von Pellets eines keramischen nuklearen Brennstoffs nach Anspruch 1, ausgeführt als ein zylinderförmiges Gefäß aus einem nicht-magnetischen Material, ausgestattet mit einer Verschlusseinheit an einem seiner Enden, **dadurch gekennzeichnet, dass** die hermetische Verschlusseinheit als Ventil ausgeführt ist, das einen Innenraum besitzt, der von dem zylinderförmigen Gefäß des Behälters durch eine für Nadeln aus ferromagnetischem Material undurchlässige transversale Trennwand aus Drahtgeflecht abgeteilt ist, wobei besagtes Ventil mit dem zylindrischen Gefäß durch eine Flanschverbindung verbunden ist.

**17.** Behälter nach Anspruch 16, **dadurch gekennzeichnet, dass** die Flanschverbindung lösbar ist.

**18.** Behälter nach Anspruch 16, **dadurch gekennzeichnet, dass** das Ventil als Kugelhahn mit einem daran montierten Antriebsmechanismus zum Drehen des Hahns ausgeführt ist.

**19.** Behälter nach Anspruch 16, **dadurch gekennzeichnet, dass** die Flanschverbindung mit einer Plattform zur stationären Fixierung und zur Positionierung des Behälters versehen ist.

**20.** Behälter nach Anspruch 16, **dadurch gekennzeichnet, dass** der zylindrische Teil des Gefäßes, der einen Teil der Arbeitszone des Behälters bildet, auf seiner Innenseite einen abgeschrägten Übergang zu seinem flachen Boden aufweist.

**Revendications**

**1.** Procédé de fabrication de pastilles de combustible nucléaire céramique comprenant les étapes consistant à préparer une poudre de moulage, à procéder à sa granulation, à comprimer et à fritter les pastilles résultantes, où l'étape de préparation de poudre de moulage comprend les opérations consistant à charger les dosages de composants en poudre de départ et un agent initiant un procédé de broyage dans un récipient fait d'un matériau non magnétique, à sceller hermétiquement le récipient, à mettre le récipient en même temps que les poudres et les aiguilles ferromagnétiques à l'intérieur du tube fait d'un matériau non magnétique placé à l'intérieur de la bobine d'induction, à broyer et à mélanger les poudres sous l'action des aiguilles ferromagnétiques se déplaçant dans le champ magnétique de la bobine d'induction, à retirer le récipient du tube, à refroidir le récipient, à desceller le récipient et à en décharger le mélange de poudre résultant dans l'unité de granulation, **CARACTERISE en ce qu'**il est établi à l'intérieur du récipient une zone de travail de forme cylindrique adaptée pour recevoir de manière permanente les aiguilles ferromagnétiques, et une zone d'extrémité, les deux zones étant isolées l'une de l'autre par une séparation à tamis imperméable aux aiguilles, les dosages des poudres sont chargés dans la zone de travail à travers la zone d'extrémité et la séparation en tamis, le récipient est placé à l'intérieur du tube sur la hauteur de la zone de travail du récipient, ledit tube étant positionné verticalement à l'intérieur de la bobine d'induction, les poudres sont traitées grâce aux aiguilles ferromagnétiques se déplaçant dans la zone de travail et le mélange de poudre résultant est déchargé du récipient à travers la séparation en treillis et la zone d'extrémité sans décharger les aiguilles ferromagnétiques de la zone de travail.

**2.** Procédé selon la revendication 1, **CARACTERISE en ce que** le poids des aiguilles ferromagnétiques qui sont chargées est établi pour être compris entre 2,5 % et 90 % de la masse critique, dont le dépassement stoppe la rotation des aiguilles dans le champ électromagnétique du mélangeur.

**3.** Procédé selon la revendication 2, **CARACTERISE en ce que** la masse critique des aiguilles ferromagnétiques est calculée par la formule :

$$m_{cr} = K_{cr}.V_c.\rho_n,$$

où $K_{cr}$ est le facteur de criticité de chargement du mélangeur avec les aiguilles, $V_c$ est le volume intérieur du récipient correspondant à la hauteur de la zone de rotation du champ électromagnétique, $\rho_n$ est la masse volumique du matériau des aiguilles.

**4.** Procédé selon la revendication 1, **CARACTERISE en ce qu'**un volume total des poudres céramiques à charger dans le récipient est établi pour ne pas dépasser 90 % d'un volume libre de celui-ci qui se trouve dans la zone de rotation du champ électromagnétique.

**5.** Procédé selon la revendication 1, **CARACTERISE en ce qu'**il est utilisé des aiguilles ferromagnétiques, où le rapport de leur longueur sur leur diamètre varie de 8 à 14.

**6.** Procédé selon les revendications 1, 2, 3 et 4, **CARACTERISE en ce que** le rapport d'un poids total de poudres céramiques sur le poids des aiguilles ferromagnétiques est établi pour être compris entre 0,3 et 3,0, principalement compris entre 0,5 et 2,0.

**7.** Procédé selon la revendication 1, **CARACTERISE en ce que** la fréquence de rotation du champ électromagnétique est établie pour être comprise entre 10 et 50 Hz.

**8.** Procédé selon la revendication 1, **CARACTERISE en ce que** les poudres sont broyées et mélangées ensemble pendant 1 à 20 minutes.

**9.** Procédé selon la revendication 8, **CARACTERISE en ce que** les poudres sont broyées et mélangées ensemble en un certain nombre de cycles pendant 1 à 10 minutes.

**10.** Procédé selon la revendication 1, **CARACTERISE en ce que** toutes les opérations à l'étape de préparation de la poudre de moulage sont exécutées dans un mélange de gaz inerte.

**11.** Dispositif de préparation de la poudre de moulage destiné à exécuter ledit procédé de fabrication de pastilles d'un combustible nucléaire céramique selon la revendication 1, comprenant une chambre de protection, une unité destinée à charger des dosages de composants en poudre de départ et un agent initiant un procédé de broyage dans le récipient, une unité de broyage et de mélange mutuel pour les poudres prenant la forme d'un inducteur comprenant une bobine à l'intérieur de laquelle est placé un tube fait d'un matériau non magnétique, conçu pour recevoir un récipient en forme de cylindre scellé de manière hermétique fait d'un matériau non magnétique conçu pour maintenir les poudres et les aiguilles faites d'un matériau magnétique, une unité de granulation de poudre, de même qu'un système d'acheminement et de positionnement de récipient, **CARACTERISE en ce que** ladite unité de broyage et de mélange des poudres utilise des axes verticaux de ladite bobine d'inductance et dudit tube, le tube est obturé à son extrémité inférieure pour former un fragment de la chambre de protection, ladite chambre de protection prend la forme d'un circuit et le récipient est conçu pour exécuter un mouvement circulaire sur ledit circuit de ladite unité de chargement vers l'unité de broyage et de mélange, puis vers l'unité de granulation et à nouveau vers l'unité de chargement, ledit circuit de la chambre de protection est formé par des caissons de traitement, conçus pour recevoir les unités du dispositif, et par des caissons de convoyage, et le système de convoyage et de positionnement de récipient est muni d'éléments destinés à déplacer verticalement le récipient le long de l'axe du tube et destinés à faire basculer ledit récipient pour décharger la poudre dans la zone de l'unité de granulation du mélange.

**12.** Dispositif selon la revendication 11, **CARACTERISE en ce que** la chambre de protection est remplie d'une atmosphère de gaz inerte.

**13.** Dispositif selon la revendication 11, **CARACTERISE en ce que** la chambre de protection est munie d'un caisson de convoyage destiné à la sortie du récipient hors du circuit de la chambre de protection.

**14.** Dispositif selon la revendication 11, **CARACTERISE en ce que** les parois de la chambre de protection sont combinées fonctionnellement avec l'ossature qui porte la charge de la structure dudit dispositif.

**15.** Dispositif selon la revendication 11, **CARACTERISE en ce que** l'inducteur avec la bobine d'inductance est disposé sur l'extérieur de ladite chambre de protection.

**16.** Récipient destiné à exécuter ledit procédé de fabrication de pastilles d'un combustible nucléaire céramique selon la revendication 1, prenant la forme d'une cuve de forme cylindrique faite d'un matériau non magnétique munie d'une unité de scellement à une de ses extrémités, **CARACTERISE en ce que** l'unité de scellement hermétique apparaît sous la forme d'une vanne ayant un espace intérieur isolé de la cuve de forme cylindrique du récipient par une séparation en treillis transversale imperméable aux aiguilles ferromagnétiques, ladite vanne étant reliée à ladite cuve cylindrique par une liaison munie d'une bride.

**17.** Récipient selon la revendication 16, **CARACTERISE en ce que** la liaison munie d'une bride est séparable.

**18.** Récipient selon la revendication 16, **CARACTERISE en ce que** la vanne revêt la forme d'un robinet à flotteur muni d'un mécanisme d'entraînement monté sur celle-ci pour que le robinet tourne.

**19.** Récipient selon la revendication 16, **CARACTERISE en ce que** la liaison munie d'une bride est dotée d'une plate-forme sur laquelle le récipient doit être fixé de manière immobile et positionné.

**20.** Récipient selon la revendication 16, **CARACTERISE en ce que** la partie cylindrique de la cuve qui fait partie de la zone de travail du récipient, sur son côté intérieur, présente une liaison chanfreinée vers un fond plat de celle-ci.

INITIAL COMPONENTS

COOLING

FIG . 1.

FIG.2

FIG.3

a

—— 10 MKM

c

—— 10 MKM

45
40
35
30
25
20
15
10
5
0

NUMBER OF ZONES| (50X50 MKM)

3,2 3,6 4,0 4,4 4,8 5,2 5,6 6,0 6,4 6,8 7,2

PLUTONIUM CONCENTRATION, %

b

45
40
35
30
25
20
15
10
5
0

NUMBER OF ZONES| (50X50 MKM)

3,2 3,6 4,0 4,4 4,8 5,2 5,6 6,0 6,4 6,8 7,2

PLUTONIUM CONCENTRATION , %

d

FIG . 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9625746 W

- RU 2122247

**Non-patent literature cited in the description**

- **F.G.RESHETNIKOV ; YU.K.BIBILASHVILI et al.** Development, manufacture and operation of fuel elements in nuclear power reactors. Energoatomizdat PH, 1995, 110